(19) Europäisches Patentamt / European Patent Office / Office européen des brevets

(11) **EP 2 555 937 B1**

(12) **EUROPEAN PATENT SPECIFICATION**

(45) Date of publication and mention
of the grant of the patent:
**28.03.2018 Bulletin 2018/13**

(51) Int Cl.:
*B60K 6/52* (2007.10)     *B60K 6/48* (2007.10)
*B60K 6/20* (2007.10)     *B60K 6/22* (2007.10)
*B60K 17/354* (2006.01)   *B60K 17/356* (2006.01)
*B60L 11/18* (2006.01)    *B60W 10/06* (2006.01)
*B60W 10/08* (2006.01)    *B60W 20/00* (2016.01)
*B60W 30/18* (2012.01)    *B60W 10/26* (2006.01)

(21) Application number: **11721656.4**

(22) Date of filing: **05.04.2011**

(86) International application number:
**PCT/IT2011/000102**

(87) International publication number:
**WO 2011/125084 (13.10.2011 Gazette 2011/41)**

(54) **KIT FOR TRANSFORMING A CONVENTIONAL MOTOR VEHICLE INTO A SOLAR HYBRID VEHICLE, AND RELEVANT MOTORVEHICLE OBTAINED BY THE KIT**

BAUSATZ ZUM UMWANDELN EINES KONVENTIONELLEN FAHRZEUGS IN EIN SOLARHYBRIDFAHRZEUG UND ENTSPRECHEND UMGEWANDELTES FAHRZEUG

JEU DE PIECES POUR TRANSFORMER UN VEHICULE AUTOMOBILE EN UN VEHICULE SOLAIRE HYBRIDE ET VEHICULE TRANSFORME CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2010 IT RM20100161**

(43) Date of publication of application:
**13.02.2013 Bulletin 2013/07**

(73) Proprietor: **EProINN s.r.l.**
**84084 Fisciano (SA) (IT)**

(72) Inventors:
• **RIZZO, Gianfranco**
**I-84084 Fisciano (SA) (IT)**
• **PIANESE, Cesare**
**I-84084 Fisciano (SA) (IT)**
• **ARSIE, Ivan**
**I-84084 Fisciano (SA) (IT)**
• **SORRENTINO, Marco**
**I-84084 Fisciano (SA) (IT)**

(74) Representative: **Iannone, Carlo Luigi et al**
**Barzanò & Zanardo Roma S.p.A.**
**Via Piemonte 26**
**00187 Roma (IT)**

(56) References cited:
EP-A1- 2 052 926          WO-A1-2009/006967
WO-A2-2008/122783         JP-A- 2009 207 327
US-A1- 2006 100 057       US-A1- 2007 125 417
US-A1- 2010 230 192       US-B1- 7 338 335

• ARSIE I ET AL: "Optimal Design of a Hybrid Electric Car with Solar Cells", 1ST AUTOCOM WORKSHOP ON PREVENTIVE AND ACTIVE SAFETY SYSTEMS FOR ROAD VEHICLES; ISTAMBUL; 2005,, 1 January 2005 (2005-01-01), pages 1-12, XP007915870, cited in the application
• ARSIE I ET AL: "A model for the Optimal Design of a Hybrid Solar Vehicle", REVIEW OF AUTOMOTIVE ENGINEERING, SOCIETY OF AUTOMOTIVE ENGINEERS OF JAPAN, TOKYO, JP, 1 January 2008 (2008-01-01), pages 439-447, XP009141411, ISSN: 1349-4724 cited in the application
• IVAN ARSIE ET AL: "Optimal Design and Dynamic Simulation of a Hybrid Solar Vehicle", SAE TRANSACTIONS, JOURNAL OF ENGINES, WARRENDALE, PA, US, vol. 115, 14 September 2006 (2006-09-14), pages 1-7, XP007915871, cited in the application

**(Cont. next page)**

EP 2 555 937 B1

- ARSIE ET AL: "Genetic Algorithms Based Optimization of Intermittent ICE scheduling on a hybrid solar vehicle", PROCEEDINGS OF THE EUROPEAN CONTROL CONFERENCE 2009; BUDAPEST, HUNGARY; AUGUST 23-36, 2009,, 23 August 2009 (2009-08-23), pages 4840-4845, XP009141413, ISBN: 978-963-311-369-1 cited in the application

**Description**

The present invention concerns a kit for transforming a conventional motor vehicle into a solar hybrid vehicle.

More in detail, the present invention relates to a motor vehicle with two driving wheels driven by an internal combustion engine and two equally driving wheels with an electric motor provided to each wheel, wherein the two wheels with electric motor are controlled on the basis of the data detected by the OBD port. The invention relates also to the fact that the solar hybrid vehicle is obtained by the simple installation of a kit for transforming a conventional two-driving wheels motor vehicle, and that it is not necessary to modify the originary motor control system of the vehicle.

Among the systems with higher energetic-environmental impact, transportation has a critical role owing to the fact that it is the main cause of the atmospheric and acoustic pollution in the urban areas and are responsible for the increase of the climate-altering emissions. Such motivations, together with the rapid increase of the private motorization in the emerging countries and the reduction of the fossil combustibles reservoirs, have incentivized the research activities aimed at defining transportation systems with low impact on environment.

Parallelly, urban areas with accesses limited to only the zero-emission vehicles fostered the development of the electric-drive vehicles. The realization of the electric vehicles presents however limitations connected to the poor endurance deriving from the reduced capacity of the electric Energy accumulation systems that are on-board. Such limitations fostered the development of hybrid vehicles, realized by coupling a thermal motor and an electric motor/generator. The suitable combination between the two systems and a suitable mechanical and coupling and control system may allow obtaining a remarkable reduction of consumptions and emissions.

Moreover, several recent studies have shown that further reductions of consumptions may be obtained by integrating the hybrid vehicles (and the electric vehicles) with photovoltaic panels. Although the power of the photovoltaic panels that can be housed on board is much lower than the maximum power of a motorcar, the Energy accumulated along the day is comparable with the energy spent for the drive when the car is used in the urban intermittent use, as it occurs for most part of motorists. The tendential reduction of costs and the parallel increase of the efficiency of the photovoltaic panels, together with the tendential increase of the fuel price increase, makes their use realistic. The industrial interest is demonstrated, by the way, by the recent launching of a model of Toyota Prius, which comprises a photovoltaic panel integrated in the roof, that is used to supply the conditioning system.

However, in spite of the recent commercial success of the hybrid vehicles, their share of penetration in the market is still insufficient to produce a significant impact on the energetic consumptions and the worldwide $CO_2$ production, nor it allows to forecast in the short term with the nowadays crisis a high rate of substitution in the circulating fleet.

Document EP 2 052 926 A1 describes a kit tor transforming a conventional motor vehicle comprising two driving wheels and alternating internal combustion motor, into a hybrid electric vehicle, comprising: two motorized wheels, provided with an electric motor and a braking system, a control unit for said two motorized wheels; and a supply battery of the electric motors of said motorized wheels.

It is object of the present invention to provide a kit for the transformation of a conventional motor vehicle into a hybrid or hybrid/solar motor vehicle, which solves the problems and overcomes the drawbacks of the prior art, providing the possibility of transforming an already fabricated vehicle without intervening on the mechanics, original motor-propeller or original control system, and with a minimal or no addition of additional sensors.

It is subject-matter of the present invention a kit for transforming a conventional motor vehicle comprising two driving wheels, alternating internal combustion motor, and OBD port, into a hybrid electric vehicle, as defined by the appended claims. Preferably according to the invention, said control unit is suitable to control the functioning of said two motorized wheels by using the following criteria:

- said motorized wheels assist the braking, generating electrical energy, when the combined analysis of the pedal position and braking torque reveals a braking phase, which occurs parallel to the braking by the mechanical brakes;
- said motorized wheels recharge said supply battery along the downhill routes, generating a light braking torque, and moreover when the power demand would lead the engine to work at a power smaller than that of the specific minimum consumption;
- In the hybrid modality, said motorized wheels effects the release of the torque when the power demand leads the engine to work besides the minimum consumption point.

Said VMU will be installed without any modification to the original engine control unit of the conventional vehicle whereon the kit will be installed. Indeed, there is on the modern motor vehicles the OBD (On Board Diagnostics) port, normally used for the diagnostics of the vehicle in garage, that allows to read numerous data relevant to the functioning of the motor and vehicle, such as: vehicle speed, engine rotation speed, accelerator pedal position, pressure in the aspiration collector, air flow to the engine, injectors opening time, refrigerant fluid temperature, ambient temperature. The installation, on vehicle, of an additional acquisition and control system allows deriving from said data the main quantities needed to control the vehicle. This is obtained by the resolution in the inverse modality of the equation of the longitudinal dynamics of the vehicle, that can be expressed in a synthetic way in the following form:

$$C(t) = k_1 \dot{V} + k_2 V^2 + k_3 V + k_4$$

Wherein the instantaneous value of the driving torque at the drive shaft $C(t)$ can be obtained starting from the speed and acceleration of the vehicle $V$, and the knowledge of the parameters $k_1$, $k_2$, $k_3$ and $k_4$ that depends on known quantities that can be estimated with good approximation, such as front section of the vehicle, aerodynamic penetration coefficient, rolling radius of the wheel, friction coefficients of the vehicles, vehicle mass, equivalent inertia momentum, route slope, transmission ratios to the speed gear and differential gear.

The transmission ratio used at the generic time $t$ can be known, even in the absence of a specific sensor for the engaged gear, by identifying the conditions of engaged gear (i.e. gear in neutral or partially or totally disengaged clutch) by means of the analysis of the ratio between the speed of vehicle $V$ and the rotation speed $n$ of the engine, both ones acquired by the OBD port. Indeed, for each one of the engaged gears, such ratio will assume a precise value, that is function of the rolling radius of the wheel and the constructive ratios at the gear box and differential gear. The acquisition of a different value will therefore identify the neutral gear drive condition and disengaged clutch.

The presence of a negative value for the calculated torque will then identify the braking conditions, even in the absence of a specific sensor on the brake pedal, allowing activating the regenerative braking strategies by the motorized wheels. In such a way, the driver will perceive the presence of a further braking torque, also warned by an acoustic and or visual signal generated by the additional panel placed on the dashboard, and will be able to modulate the use of the mechanical brake, thus fostering the partial recovery of the braking energy by the rear wheels.

The combined analysis of the longitudinal dynamics and other quantities, such as the accelerator position and the injectors opening, and the knowledge of the engine functioning maps (technical datum made available by the producing company or detectable una tantum by benchmark or on-the-road measurements), allows to estimate the operative conditions such as road slope, actual vehicle mass and favorable or unfavorable wind conditions, also in the absence of specific sensors.

Moreover, it is to be noted that the availability of some modern navigation systems allows knowing in real time also the road slope.

Such data can be read with frequencies higher than 1 Hz, and are therefore sufficient to control a control system of the motorized wheels.

An additional steering wheel angular position sensor further allows to derive the vehicle shift angle, and control the motorized wheels in a differentiated way, achieving an effect analogous to that connected to the use of the differential gear in the conventional motor vehicles.

The adoption of the described control system will guarantee a secure and effective functioning of the hybrid vehicle as obtained after the installation of the conversion kit. The control strategies implemented in the VMU will be sufficiently versatile and flexible so as to guarantee an effective management of both the hybridizing elements of the kit and the components of the originary power train on which one wishes to install it.

Preferably according to the invention, said control unit controls said two motorized wheels in such a way that they release torque even with low load conditions, with engaged gear, when the charge level of the supply battery is particularly high.

Preferably according to the invention, said control unit is apt to control said motorized wheels in such a way that the motor vehicle works in the electric modality, with inactive internal combustion motor.

Preferably according to the invention, said motorized wheels are pre-arranged for substituting the rear wheels of the originary vehicle.

Preferably according to the invention, said supply battery is an only battery pre-arranged for substituting the conventional battery of the motor vehicle, which serves for the electric supply of the ordinary electric systems of the motor vehicle.

Preferably according to the invention, said supply battery is an additional battery with respect to the battery for the electric supply of the ordinary electric systems of the motor vehicle.

Preferably according to the invention, the kit further comprises photovoltaic panels for recharging said supply battery.

Preferably according to the invention, the kit uses auto-steerable solar panel during the phases of parking of the vehicle for maximizing the impinging solar energy for recharging said supply battery.

The invention will be now described by way of illustration but not by way of limitation, with particular reference to the figures of the annexed drawings, wherein:

- figure 1 shows a block diagram of a vehicle modified by the system according to the invention;
- figure 2 shows a specific fuel consumption diagram for a conventional motor vehicle.

This application concerns the development of a system of equipments, and the relevant techniques and methodologies, aimed at transforming traditional motorcars into Mild-Solar-Hybrid vehicles, and the relevant control of energetic fluxes. In particular, it is provided the application of electrically motorized wheels on the rear axle (in case of front drive vehicles) and the integration of photovoltaic panels.

Such an architecture can be enriched with an additional battery pack and a control system that does not interfere with the original central control unit but complement it, extracting data through the OBD port mounted normally in all modern cars. As an alternative, it is possible to substitute the original battery with a battery having higher capacity, without using an additional battery.

By means of a suitable control strategy, the electric cars can perform the regenerative braking, when the driver lift the foot from the accelerator and/or when one presses the brake pedal, supplying the battery pack. As an alternative, the same electric cars could deliver driving torque, complementing the thermal engine in the hybrid operation mode, or substituting the thermal engine in the fully electric operation mode with the thermal engine off (for example, in the urban traffic). The integration of the photovoltaic panels (possibly steerable with respect to the sight for the parking phases) allows further significant fuel savings.

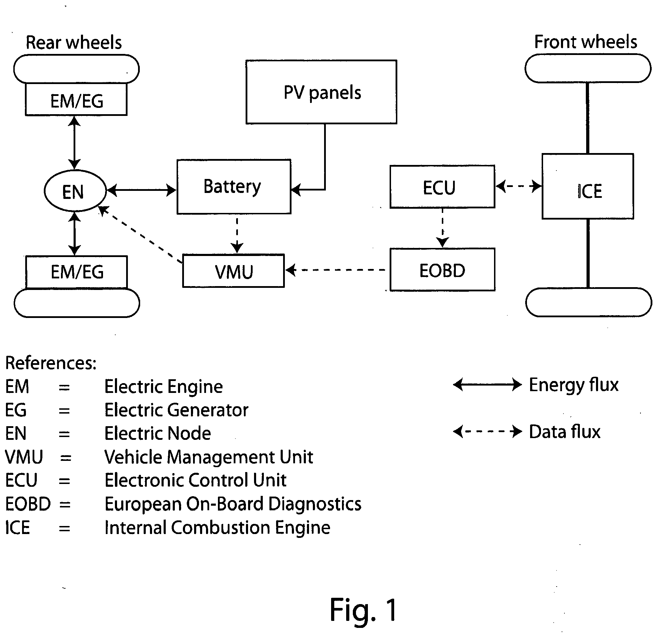

The functioning of the system is schematically illustrated in figure 1. The hybridization system is installed on a conventional vehicle (by way of illustration, a two-wheeled and front-wheel drive vehicle) wherein the front axle is driven by an internal combustion engine ("ICE"), controlled by the engine control system ("ECU") mounted by the constructor of the vehicle. The vehicle is also normally equipped with a OBD port ("On Board Diagnostics" protocol), which allows, with suitable equipments such as those used in the garages for maintenance and diagnostics, to access data such as vehicle speed, engine rotation speed, pressure in correspondence of induction, temperature of the cooling fluid and other variables provided by that protocol.

The hybridization is realized by substituting the rear wheels by wheels with in-wheel motors, which include an electric engine that can work both as engine and generator, and a brake (equal to that mounted on the original rear wheels). In such a way, the vehicle can operate both in the electric mode (when the thermal engine is off or disconnected from the front wheels) and in the hybrid modality, according to a "parallel hybrid" structure (when the thermal engine drives the front wheels and the electric engines operate in the drive mode or recharging mode, corresponding to a respectively positive or negative torque).

The auxiliary battery supplies the electric motors, and can be recharged both by the rear wheels in the generation mode (regenerative braking or hybrid mode with resisting torque) and by the solar panels mounted on the roof (both during the drive phase and parking phase). The vehicle control system or unit ("VMU"), which is part of the present invention, receives the data from OBD port and the battery (for the estimation of the charge status) and, by a suitable control logic, drives the rear wheels by acting on the electric node "EN". The control system can communicate with the driver even by a suitable panel on the dashboard, and connected to the "VMU".

The study of the control logic for the system according to the invention is of particular interest, since the addition of the transformation kit according to the invention should not interfere with the original control system, nor it should alter the usual modes of driving of a conventional motor vehicle, nor it should decreasing security and reliability of the vehicle. Therefore, the energetic and control management modes differ in a substantial way with respect to those usually adopted in the hybrid vehicles.

The control of the motorized wheels can be effected without intervening on the original control system and without adding sensors, but simply with an additional control system (VMU) which utilizes the data extracted through the OBD port. In particular, it can be sufficient detecting the vehicle speed data $V$, motor angular speed $n$ and position $\beta$ of the accelerator pedal. Starting from these data, the main motor variables are estimated useful to the control, as specified in the following.

From VMU, battery current and/or battery voltage data battery are further acquired, estimating the charge state ("SOC"), as well as solar panels current and voltage data, that can be controlled by the same VMU or by a separate circuit.

The data can be processed in real time, obtaining the vehicle acceleration $a$ and, by the integration of the longitudinal dynamic equation and the relations of kinematic coupling of the system wheels-differential-speed gear-motor, the driving (or braking) to the wheels and the engine axle $C$. The analysis of the ratio $V/n$ further allows to verify whether the vehicle is working with one of the speeds engaged, or in neutral or with the clutch partially or totally pushed. From $C,n$ values, it is possible to derive the operative condition of the engine, estimating its efficiency (i.e. the specific consumption) starting from working maps previously loaded in the VMU.

The control logic is based on the following scheme:

1. The motorized wheels assist the braking, generating electric energy, when joint analysis of the pedal position and the braking torque determines the presence of a braking phase. In any case, the braking occurs in parallel even with the mechanical brakes, and without therefore altering the security conditions and the functioning of possible ABS systems of the vehicle.

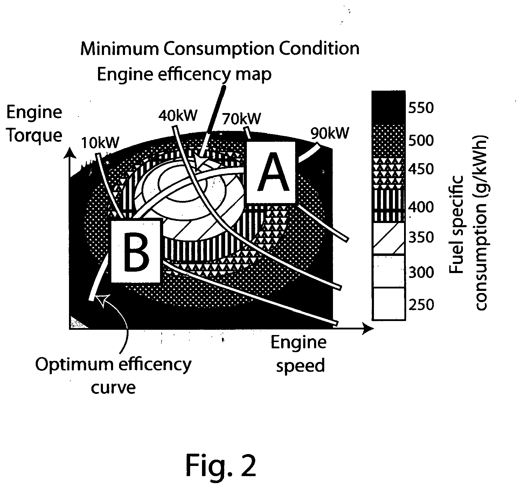

2.The wheels can recharge the battery even in the descents, generating a slight braking torque, and when the power need would make the engine working at an rpm that is lower than that of minimum specific consumption (region B in figure 2). In such a way, the operation of the electric motor would lead the engine to work within conditions that are nearer to the optimal ones.

3.In the hybrid mode (with the engine running), the wheels can effect the release of the torque when the power need makes the engine working besides the point of minimum consumption (region A of figure 2).

In such a case, the intervention of the electric engine brings the operation conditions back towards the optimum point. The wheels can further release torque even in low- conditions load, with engaged speed, when the charge level of the battery (SOC) be particularly high.

The system can work even in the electric mode, that can be activated by the driver by the control panel, and with the engine off. This mode can be used both in the urban traffic conditions (by verifying however the operational state of the power steering and power brake, as well as of the electric services) and in emergency conditions, in case of failure of the thermal engine or fuel burn-up.

Advantages of the invention

The main benefits obtained by the system according to the invention are of environmental and energetic order, due to the possibility of intervening on the existing fleet in order to reduce fuel consumption and emissions by means of the use of solar Energy, the partial recuperation of energy of the braking in the descent phases and the further optimization of the operating conditions of the thermal engine thanks to the co-operation of the electric machines.

The presence of a second propulsion system that is potentially independent from the thermal engine provides further advantages both in terms of performances (tank to the starting torque of the electric motors) and reliability, thanks to the possibility of moving the vehicle even when the thermal engine does not work or there is no more fuel.

The data detection by the OBD port allows, besides controlling the hybridization system, estimating the energy spent for the braking and the work made by the clutch, that are quantities necessary to a predictive maintenance of such members.

The use of a tracking system for the solar panel will allow further the maximization of the solar light collection during the parking phases with respect to the horizontal position, being able to come closer to the conditions of perpendicularity of solar rays.

Various authors have published a number of scientific and popular articles on the solar hybrid vehicles, which provide the development of an ad-hoc vehicle (and not of a kit for the transformation of a conventional vehicle, as in the present invention). Such studies allow to estimate the several advantages in terms of fuel consumption and climate-altering emissions that can be obtained by using together an hybrid propulsion system (thermal/electric) with the photovoltaic source. The system according to the invention, that is applicable to the conventional motor vehicles, permits to keep a large part of the advantages of the already studied solar-hybrid vehicles. Some recent publications on the matter are listed hereafter:

- I. Arsie, M. Marotta, C. Pianese, G. Rizzo, M. Sorrentino (2005), "Optimal Design of a Hybrid Electric Car with Solar Cells", In: "1st AUTOCOM Workshop on Preventive and Active Safety Systems for Road Vehicles", Istanbul
- I. Arsie, G. Rizzo, M. Sorrentino (2008), "A Model for the Optimal Design of a Hybrid Solar Vehicle", Review of Automotive Engineering, Society of Automotive Engineers of Japan (JSAE), 2008, ISSN 1349-4724. 29-3: 439-447;
- I. Arsie, G. Rizzo, M. Sorrentino (2007), "Optimal Design and Dynamic Simulation of a Hybrid Solar Vehicle", SAE TRANSACTIONS-JOURNAL OF ENGINES 115-3: 805-811;
- I. Arsie, G. Rizzo, M. Sorrentino (2009), "Genetic Algorithms Based Optimization of Intermittent ICE scheduling on a Hybrid Solar Vehicle", Proceedings of European Control Conference 2009, ECC09, Budapest, August 23-26, 2009.
- I. Arsie, C. Pianese, G. Rizzo, M. Sorrentino (2009), "Progetto ottimizzato e gestione dei flussi energetici"; in: Sistemi di Propulsione Elettrica ed Ibrida. vol. 1. A CURA DI GIAMPIERO BRUSAGLINO, GIOVANNI PEDE ED EMILIO VITALE. Edited by: ENEA, Roma. ISBN/ISSN: 978-88-8286-205-3. 451-477.

The preferred embodiments have been above described and some modifications of this invention have been suggested, but it should be understood that those skilled in the art can make variations and changes, without so departing from the related scope of protection, as defined by the following claims.

**Claims**

1. Kit for transforming a conventional motor vehicle comprising two driving wheels, alternating internal combustion motor (ICE), and On Board Diagnostic port (EOBD), into a hybrid electric vehicle, comprising:

   - two motorized wheels, provided with an electric motor (EM) and a braking system;
   - a control unit (VMU) for said two motorized wheels;
   - a supply battery (Battery) of the electric motors (EM) of said motorized wheels;

   **characterised in that** it further comprises:

   - means for connection of said control unit (VMU) to the On Board Diagnostic port (EOBD) of the conventional motor vehicle,

   the control unit (VMU) being configured to:

   - read first data relevant to: vehicle speed, motor rotation speed, position of the acceleration pedal,
- estimate the charging status of said supply battery on the basis of the first data, and
- solve in inverse modality the equation of the longitudinal dynamics of the vehicle, whereby deriving second data;
- control the functioning of said two motorized wheels on the basis of said second data.

2. Kit according to claim 1, **characterised in that** said control unit (VMU) is suitable to control the functioning of said two motorized wheels by using the following criteria:

- said motorized wheels assist the braking, generating electrical energy, when the combined analysis of the pedal position and braking torque reveals a braking phase, which occurs parallel to the breaking by the mechanical brakes;
- said motorized wheels recharge said supply battery along the downhill routes, generating a light braking torque, and moreover when the power demand would lead the engine to work at a power smaller than that of the specific minimum consumption;
- in the hybrid modality, said motorized wheels effects the release of the torque when the power demand leads the engine to work besides the minimum consumption point.

3. Kit according to claim 1 or 2, **characterized in that** said control unit (VMU) controls said two motorized wheels in such a way that they release torque even with low load conditions, with engaged gear, when the charge level of the supply battery (SOC) is particularly high.

4. Kit according to any claim 1 to 3, **characterised in that** said control unit (VMU) is apt to control said motorized wheels in such a way that the motor vehicle works in the electric modality, with inactive internal combustion motor.

5. Kit according to any claim 1 to 4, **characterized in that** said motorized wheels are pre-arranged for substituting the rear wheels of the originary vehicle.

6. Kit according to any claim 1 to 5, **characterised in that** said supply battery (Battery) is an only battery pre-arranged for substituting the conventional battery of the motor vehicle, which serves for the electric supply of the ordinary electric systems of the motor vehicle.

7. Kit according to any claim 1 to 6, **characterized in that** said supply battery (Battery) is an additional battery with respect to the battery for the electric supply of the ordinary electric systems of the motor vehicle.

8. Kit according to any claim 1 to 7, **characterised in that** it further comprises photovoltaic panels (PV) for recharging said supply battery (Battery).

9. Kit according to any claim 1 to 8, **characterised in that** it uses auto-steerable solar panel during the phases of parking of the vehicle for maximizing the impinging solar energy for recharging said supply battery (Battery).

10. Hybrid electric four-wheeled motor vehicle, comprising two drive wheels driven by an alternating internal combustion engine (ICE), **characterised in that** it further comprises:

- two motorised wheels, provided with an electric motor (EM) and a braking system,
- a control unit (VMU) of said two motorised wheels;
- a supply battery (Battery) of the electric motors (EM) of said two motorised wheels,

and **in that** it is obtained by application of the kit according to any claim 1 to 9, on a conventional motor vehicle.

**Patentansprüche**

1. Bausatz zu dem Umwandeln eines herkömmlichen Kraftfahrzeugs, das zwei Antriebsräder, einen Verbrennungsmotor (ICE) und einen On-Board-Diagnoseanschluss (EOBD) umfasst, in ein Hybrid-Elektrofahrzeug, umfassend:

- zwei motorisierte Räder, die mit einem Elektromotor (EM) und einem Bremssystem ausgestattet sind;
- eine Steuereinheit (VMU) für die zwei motorisierten Räder;
- eine Versorgungsbatterie (Batterie) der Elektromotoren (EM) der motorisierten Räder;

**dadurch gekennzeichnet, dass** es weiter folgende umfasst:

- Mittel zu dem Verbinden der Steuereinheit (VMU) mit dem On-Board-Diagnoseanschluss (EOBD) des herkömmlichen Kraftfahrzeugs,

dass die Steuereinheit (VMU) für folgende konfiguriert ist:

- Lesen erster Daten, die relevant für folgende sind: Fahrzeuggeschwindigkeit, Motordrehzahl, Position des Gaspedals,

- Schätzen des Ladezustands der Versorgungsbatterie auf der Basis der ersten Daten, und
- Lösen der Gleichung der Längsdynamik des Fahrzeugs in dem umgekehrten Modus, wodurch zweite Daten abgeleitet werden;
- Steuern der Funktion der zwei motorisierten Räder auf der Grundlage der zweiten Daten.

2. Bausatz nach Anspruch 1, **dadurch gekennzeichnet, dass** die Steuereinheit (VMU) dazu geeignet ist, die Funktion der zwei motorisierten Räder unter Verwendung der folgenden Kriterien zu steuern:

   - die motorisierten Räder unterstützen das Bremsen und erzeugen elektrische Energie, wenn die kombinierte Analyse der Pedalposition und des Bremsmoments eine Bremsphase aufdeckt, die parallel zu dem Bremsen durch die mechanischen Bremsen auftritt;
   - die motorisierten Räder laden die Versorgungsbatterie entlang den Abfahrtsrouten durch Erzeugen eines leichten Bremsmoments und darüber hinaus, wenn der Leistungsbedarf den Motor dazu bringen würde, durch Arbeiten mit einer Leistung, die kleiner als die des spezifischen minimalen Verbrauchs ist, auf;
   - in dem hybriden Modus bewirken die motorisierten Räder die Freigabe des Drehmoments, wenn der Leistungsbedarf den Motor dazu bringt, neben dem minimalen Verbrauchspunkt zu arbeiten.

3. Bausatz nach Anspruch 1 oder 2, **dadurch gekennzeichnet, dass** die Steuereinheit (VMU) die beiden motorisierten Räder so steuert, dass sie auch bei niedrigen Lastverhältnissen, bei eingelegtem Gang, bei Ladezustand der Versorgungsbatterie (SOC) besonders hohen Drehmoment abgeben.

4. Bausatz nach einem der Ansprüche 1 bis 3, **dadurch gekennzeichnet, dass** die Steuereinheit (VMU) dazu geeignet ist, die motorisierten Räder so zu steuern, dass das Kraftfahrzeug in dem elektrischen Modus mit einem inaktiven Verbrennungsmotor arbeitet.

5. Bausatz nach einem der Ansprüche 1 bis 4, **dadurch gekennzeichnet, dass** die motorisierten Räder zu dem Ersatz der Hinterräder des ursprünglichen Fahrzeugs vormontiert sind.

6. Bausatz nach einem der Ansprüche 1 bis 5, **dadurch gekennzeichnet, dass** die Versorgungsbatterie (Batterie) eine einzige Batterie ist, die zur Substitution der herkömmlichen Batterie des Kraftfahrzeugs vorgesehen ist, die zur elektrischen Versorgung der gewöhnlichen elektrischen Systeme des Kraftfahrzeugs dient.

7. Bausatz nach einem der Ansprüche 1 bis 6, **dadurch gekennzeichnet, dass** die Versorgungsbatterie (Batterie) eine zusätzliche Batterie in Bezug auf die Batterie zur elektrischen Versorgung der gewöhnlichen elektrischen Systeme des Kraftfahrzeugs ist.

8. Bausatz nach einem der Ansprüche 1 bis 7, **dadurch gekennzeichnet, dass** er weiter Photovoltaikmodule (PV) zu dem Wiederaufladen der Versorgungsbatterie (Batterie) aufweist.

9. Bausatz nach einem der Ansprüche 1 bis 8, **dadurch gekennzeichnet, dass** er während der Parkphasen des Kraftfahrzeugs zur Maximierung der auftreffenden Solarenergie zur Wiederaufladung der Versorgungsbatterie (Batterie) ein automatisch lenkbares Solarpaneel verwendet.

10. Hybridelektrisches vierrädriges Kraftfahrzeug, umfassend zwei von einem alternierenden Verbrennungsmotor (ICE) angetriebene Antriebsräder, **dadurch gekennzeichnet, dass** es weiter folgende umfasst:

    - zwei motorisierte Räder, die mit einem Elektromotor (EM) und einem Bremssystem ausgestattet sind,
    - eine Steuereinheit (VMU) der zwei motorisierten Räder;
    - eine Versorgungsbatterie (Batterie) der Elektromotoren (EM) der zwei motorisierten Räder,

    und dadurch, dass es durch Anwendung des Bausatzes nach einem der Ansprüche 1 bis 9 an einem herkömmlichen Kraftfahrzeug erhalten wird.

## Revendications

1. Kit pour transformer un véhicule automobile classique comprenant deux roues motrices, un moteur alternatif à combustion interne (ICE) et un système de diagnostic embarqué (EOBD), en un véhicule électrique hybride, comprenant :

   - deux roues motorisées, munies d'un moteur électrique (EM) et d'un système de freinage ;
   - une unité de commande (VMU) pour lesdites deux roues motorisées ;
   - une batterie d'alimentation (Batterie) des moteurs électriques (EM) desdites roues motorisées ;

   **caractérisé en ce qu'**il comprend en outre :

   - un moyen de connexion de ladite unité de commande (VMU) audit système de diagnostic embarqué (EOBD) du véhicule automobile classique,

l'unité de commande (VMU) étant configurée pour :

- lire des premières données se rapportant à : la vitesse de véhicule, la vitesse de rotation du moteur, la position de la pédale d'accélération,
- évaluer l'état de charge de ladite batterie d'alimentation sur la base des premières données, et
- résoudre en modalité inverse l'équation de la dynamique longitudinale du véhicule, de façon à obtenir des secondes données ;
- commander le fonctionnement desdites deux roues motorisées sur la base desdites secondes données.

**2.** Kit selon la revendication 1, **caractérisé en ce que** ladite unité de commande (VMU) est appropriée pour commander le fonctionnement desdites deux roues motorisées en utilisant les critères suivants :

- lesdites roues motorisées aident au freinage, produisant de l'énergie électrique, quand l'analyse combinée de la position de pédale et du couple de freinage révèle une phase de freinage, qui survient parallèlement au freinage par les freins mécaniques ;
- lesdites roues motorisées rechargent ladite batterie d'alimentation le long d'itinéraires en descente, produisant un léger couple de freinage, et en outre lorsque la demande de puissance pousserait le moteur à travailler à une puissance plus petite que celle de la consommation minimale spécifique ;
- dans la modalité hybride, lesdites roues motorisées effectuent la libération du couple lorsque la demande de puissance conduit le moteur à travailler en plus du point de consommation minimale.

**3.** Kit selon la revendication 1 ou 2, **caractérisé en ce que** ladite unité de commande (VMU) commande lesdites deux roues motorisées d'une telle façon qu'elles libèrent un couple même avec des conditions de faible charge, avec une vitesse en prise, lorsque le niveau de charge de la batterie d'alimentation (SOC) est particulièrement élevé.

**4.** Kit selon l'une quelconque des revendications 1 à 3, **caractérisé en ce que** ladite unité de commande (VMU) est apte à commander lesdites roues motorisées d'une telle façon que le véhicule automobile travaille dans la modalité électrique, avec le moteur à combustion interne inactif.

**5.** Kit selon l'une quelconque des revendications 1 à 4, **caractérisé en ce que** lesdites roues motorisées sont pré-agencées pour remplacer les roues arrière du véhicule d'origine.

**6.** Kit selon l'une quelconque des revendications 1 à 5, **caractérisé en ce que** ladite batterie d'alimentation (Batterie) est une batterie unique pré-agencée pour remplacer la batterie classique du véhicule automobile, qui sert pour l'alimentation électrique des systèmes électriques ordinaires du véhicule automobile.

**7.** Kit selon l'une quelconque des revendications 1 à 6, **caractérisé en ce que** ladite batterie d'alimentation (Batterie) est une batterie supplémentaire par rapport à la batterie pour l'alimentation électrique des systèmes électriques ordinaires du véhicule automobile.

**8.** Kit selon l'une quelconque des revendications 1 à 7, **caractérisé en ce qu'**il comprend en outre des panneaux photovoltaïques (PV) pour recharger ladite batterie d'alimentation (Batterie).

**9.** Kit selon l'une quelconque des revendications 1 à 8, **caractérisé en ce qu'**il utilise un panneau solaire à orientation automatique pendant les phases de stationnement du véhicule pour maximiser l'énergie solaire incidente pour recharger ladite batterie d'alimentation (Batterie).

**10.** Véhicule automobile à quatre roues électrique hybride, comprenant deux roues motrices entraînées par un moteur alternatif à combustion interne (ICE), **caractérisé en ce qu'**il comprend en outre :

- deux roues motorisées, munies d'un moteur électrique (EM) et d'un système de freinage,
- une unité de commande (VMU) desdites deux roues motorisées ;
- une batterie d'alimentation (Batterie) des moteurs électriques (EM) desdites deux roues motorisées,

et **en ce qu'**il est obtenu par l'application du kit selon l'une quelconque des revendications 1 à 9, sur un véhicule automobile classique.

Rear wheels

EM/EG

EN

Front wheels

PV panels

Battery

ECU

ICE

EM/EG

VMU

EOBD

References:

EM = Electric Engine
EG = Electric Generator
EN = Electric Node
VMU = Vehicle Management Unit
ECU = Electronic Control Unit
EOBD = European On-Board Diagnostics
ICE = Internal Combustion Engine

←——→ Energy flux

←- - - -→ Data flux

Fig. 1

EP 2 555 937 B1

Fig. 2

**EP 2 555 937 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2052926 A1

**Non-patent literature cited in the description**

- **I. ARSIE ; M. MAROTTA ; C. PIANESE ; G. RIZZO ; M. SORRENTINO.** Optimal Design of a Hybrid Electric Car with Solar Cells. *st AUTOCOM Workshop on Preventive and Active Safety Systems for Road Vehicles,* 2005
- **I. ARSIE ; G. RIZZO ; M. SORRENTINO.** A Model for the Optimal Design of a Hybrid Solar Vehicle. *Review of Automotive Engineering, Society of Automotive Engineers of Japan (JSAE),* 2008, vol. 29-3, ISSN 1349-4724, 439-447
- **I. ARSIE ; G. RIZZO ; M. SORRENTINO.** Optimal Design and Dynamic Simulation of a Hybrid Solar Vehicle. *SAE TRANSACTIONS-JOURNAL OF ENGINES,* 2007, vol. 115-3, 805-811

- **I. ARSIE ; G. RIZZO ; M. SORRENTINO.** Genetic Algorithms Based Optimization of Intermittent ICE scheduling on a Hybrid Solar Vehicle. *Proceedings of European Control Conference 2009, ECC09,* 2009
- Progetto ottimizzato e gestione dei flussi energetici. **I. ARSIE ; C. PIANESE ; G. RIZZO ; M. SORRENTINO.** Sistemi di Propulsione Elettrica ed Ibrida. vol. 1. A CURA DI GIAMPIERO BRUSAGLINO, GIOVANNI PEDE ED EMILIO VITALE. 2009, vol. 1